# EUROPÄISCHE PATENTSCHRIFT

(11) **EP 2 699 834 B1**
(45) Veröffentlichungstag und Bekanntmachung des Hinweises auf die Patenterteilung: **06.06.2018**
(21) Anmeldenummer: 12715924.2
(22) Anmeldetag: 13.04.2012
(51) Int. Cl.: F16L 33/02, F16L 33/08, F16L 47/00, F16L 55/04, F16L 25/00

(54) **HOHLKÖRPER MIT ANSCHLUSSSTUTZEN**
HOLLOW BODY WITH CONNECTION STUB
CORPS CREUX MUNI D'EMBOUTS DE RACCORDEMENT

(30) Priorität: 20.04.2011 DE 102011007744
(43) Veröffentlichungstag der Anmeldung: 26.02.2014
(73) Patentinhaber: MAHLE International GmbH, 70376 Stuttgart (DE)
(72) Erfinder: ZIRKELBACH, Thomas, 71732 Tamm (DE)
(74) Vertreter: BRP Renaud & Partner mbB Rechtsanwälte Patentanwälte Steuerberater
(86) Internationale Anmeldenummer: PCT/EP2012/056779
(87) Internationale Veröffentlichungsnummer: WO 2012/143297

(56) Entgegenhaltungen:
- EP-A1- 0 013 458
- EP-A2- 2 090 817
- DE-A1-102008 016 690
- DE-U1- 20 218 071
- DE-U1- 20 315 084

## Beschreibung

Die Erfindung bezieht sich auf Hohlkörper mit zumindest einem Anschlussstutzen für einen schlauch- oder rohrartigen Anschlusskörper, welcher an oder auf dem Anschlussstutzen in axial anschließender Position fixierbar ist, mit den Merkmalen des Oberbegriffs des Anspruchs 1.

Ein gattungsgemäßer Hohlkörper ist aus der EP 0 013 458 A1 bekannt. Dabei weist der vollständig als Kunststoffteil ausgebildete Verbindungsstutzen zumindest innerhalb eines den Anschlusskörper fortsetzenden oder eines vom Anschlusskörper axial überlappten Bereiches ein Profil mit erhöhter Formstabilität zur Abtragung von Radialkräften auf, wobei der Verbindungsstutzen eine doppelte Umfangswand mit zwischen den beiden Wänden angeordneten Versteifungen aufweist und wobei die Versteifungen als die Umfangswände verbindende Stege oder Axialwände ausgebildet sind, welche in Achsansicht des Verbindungsstutzens speichenartig radial angeordnet sind.

Bei einer aus der DE 20 2008 015 768 U1 bekannten Konstruktion ist auf dem Außenumfang des Anschlussstutzens, der aus Kunststoff gefertigt ist, ein Metallring fest angeordnet, der im montierten Zustand des Anschlusskörpers dessen Innenumfang im Bereich einer Schlauchschelle radial abstützt und die von der Schlauchschelle ausgehenden Presskräfte aufnimmt. Eine ähnliche Konstruktion ist aus der EP 0 631 084 A1 bekannt. Hier besteht der Metallring aus zwei Halbschalen, so dass die Anordnung des Metallrings am Anschlussstutzen erleichtert wird. Bei einer aus der WO 98/41790 bekannten Konstruktion besteht der Anschlussstutzen aus Metall bzw. einem mit Glasfasern oder dergleichen verstärkten Kunststoff, so dass eine hinreichende Belastbarkeit gegenüber den Presskräften der Schlauchschelle gewährleistet wird.

Bei diesen bekannten Konstruktionen ist nachteilig, dass verschiedenartige Materialien zum Einsatz kommen und dadurch eine Wiederverwendung der Materialien am Ende der Lebensdauer des Hohlkörpers erschwert wird.

Deshalb ist es Aufgabe der Erfindung, bei einem Hohlkörper einen Anschlussstutzen zu schaffen, der aus einem einzigen Kunststoffmaterial besteht und gleichwohl eine hinreichende Tragkraft aufweist, derart, dass unter dem Pressdruck der Schlauch- bzw. Rohrschelle eine dauerhafte Dichtigkeit zwischen Hohlkörper und Anschlusskörper gewährleistet wird und ein Kriechen der aufeinander gepressten Materialien vermieden wird.

Diese Aufgabe wird erfindungsgemäß durch die Merkmale des Anspruchs 1 gelöst. Der vollständig als Kunststoffteil ausgebildete Anschlussstutzen weist zumindest innerhalb eines den Anschlusskörper fortsetzenden oder vom Anschlusskörper axial überlappten Axialbereiches ein Profil mit erhöhter Formstabilität zur Abtragung von Radialkräften auf. Die Erfindung beruht auf dem allgemeinen Gedanken am Anschlussstutzen Profile einzusetzen, die eine erhöhte Belastbarkeit gewährleisten, dazu dienen insbesondere Profile mit größerer radialer Höhe.
Erfindungsgemäß ist ein Axialbereich des Anschlussstutzens, insbesondere an dessen freiem Ende, doppelwandig ausgebildet, wobei innerhalb des Abstandsraumes zwischen der äußeren und der inneren Wand in Axialrichtung des Anschlussstutzens erstreckte Stege vorgesehen sind. Diese Stege bilden mit den unmittelbar anschließenden Bereichen der äußeren und der inneren Wand ein Doppel-T-Profil, so dass eine sehr hohe Belastbarkeit erreicht wird.
Bei der Erfindung wird die Möglichkeit genutzt, durch eine besondere geometrische Ausbildung des Verbindungsstutzens auch dann, wenn dieser ausschließlich aus Kunststoff hergestellt ist, eine hohe Tragkraft zu gewährleisten. Dabei wird die Tatsache ausgenutzt, dass mit Kunststoffen praktisch beliebige Formen bei vergleichsweise geringem Herstellungsaufwand realisierbar sind. Insbesondere werden Formen vorgesehen, bei denen auf den Außenumfang des Verbindungsstutzens einwirkende Kräfte auf Kunststoffbereiche bzw. -teile mit größerem Radialabstand von der Umfangsfläche abgetragen werden. Im Ergebnis wird damit die Möglichkeit geschaffen, für die Herstellung eines stark belastbaren Verbindungsstutzens bzw. Hohlkörpers ein einziges Material zu verwenden.

Erfindungsgemäß ist vorgesehen, dass der Abstandsraum zwischen den beiden Wänden mit dem Innenraum des Hohlkörpers bzw. des Anschlusskörpers kommuniziert und aufgrund entsprechender Bemessung einen Resonator bildet, mit dem Geräusche gedämpft werden können. Wenn bspw. innerhalb des Hohlkörpers und/oder des Anschlusskörpers Schallwellen mit einer Wellenlänge λ auftreten, kann der genannte Abstandsraum als λ/4-Resonator ausgebildet sein, um Geräusche mit der Wellenlänge λ abzumildern.

Darüber hinaus ist es bei einer mehrwandigen Ausführung des Anschlussstutzens möglich, der radial inneren Wand eine besondere strömungsgünstige Form zu geben, z.B. kann die innere Wand nach Art einer Venturidüse geformt sein.

Gemäß einer weiteren Ausführungsform können am Innenumfang einer Umfangswand des Verbindungsstutzens quer zur Umfangsrichtung erstreckte Stege angeformt sein, über die in Radialrichtung auf die Umfangswand einwirkende Kräfte auf axial benachbarte Bereiche des Verbindungsstutzens übertragen werden.

Gemäß einer nicht-erfindungsgemäßen Ausführungsform kann ein mehrwandiges Profil am Verbindungsstutzen dadurch verwirklicht werden, dass ein axialer Abschnitt des Verbindungsstutzens balgartig mit auf Block gestauchten oder zueinander beabstandeten Balgfalzen ausgebildet ist. Innerhalb des balgartigen Abschnittes liegen damit ringscheibenartige Kunststoffelemente aufeinander, die an ihrem Außen- bzw. Innenrändern U-förmig mit einer axial benachbarten Ringscheibe verbunden sind. Das Radialmaß der Ringscheiben kann an praktisch beliebige Radialkräfte angepasst werden. Die Abschnitte können bei besonderen Ausgestaltungen auch miteinander verschweißt werden, um die Stabilität des Anschlussstutzens zu erhöhen. Derartige Profile können bevorzugt durch Blasformen hergestellt werden.

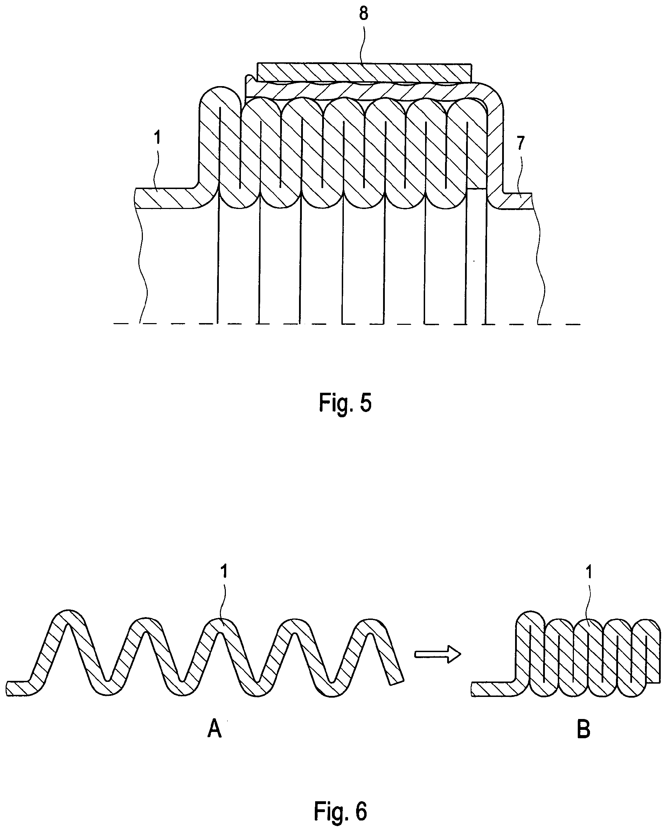

Ein Vorteil dieser nicht-erfindungsgemäßen Ausführungsform liegt darin, dass axial benachbarte Falze ggf. mit unterschiedlichen Radialmaßen ausgebildet sein können, um bspw. auf dem Außenumfang eines Verbindungsstutzens einen ringflanschartigen Steg oder dgl. zu bilden, der als Anschlag für einen Schlauch oder ein Rohr dienen kann.
Außerdem kann der Verbindungsstutzen mehrteilig ausgebildet sein, wobei ein rohrförmiger Abschnitt des Hohlkörpers mit einem gegebenenfalls mehrwandigen Ein- oder Aufschubteil kombiniert wird.
Schließlich ist es möglich, anstelle einer kraftschlüssigen Verbindung zwischen Anschlussstutzen und Anschlusskörper mittels Rohr- oder Schlauchschelle eine stoffschlüssige Verbindung, z.B. durch Schweißen, vorzusehen.
Im Übrigen wird hinsichtlich bevorzugter Ausführungsformen der Erfindung auf die Ansprüche sowie die nachfolgende Erläuterung der Zeichnung verwiesen, anhand der besonders bevorzugte Ausführungsformen der Erfindung näher erläutert werden, wobei die Fig. 5 bis 9 und 12 keine erfindungsgemäßen Ausführungsformen zeigen.

In der Zeichnung zeigt
- Fig. 1: eine Achsansicht eines freien Endes eines Verbindungsstutzens mit doppelter Umfangswand,
- Fig. 2: einen Axialschnitt dieses Verbindungsstutzens gemäß der Schnittlinie II-II in Fig. 1,
- Fig. 3: einen Axialschnitt einer abgewandelten Ausführungsform, bei der die Freiräume zwischen den Umfangswänden zur Geräuschdämpfung genutzt werden,
- Fig. 4: eine der Fig. 1 entsprechende Achsansicht einer abgewandelten Ausführungsform,
- Fig. 5: einen Axialschnitt eines Verbindungsstutzens mit einem Axialbereich, der nach Art eines gestauchten Balges ausgeformt ist,
- Fig. 6: verschiedene Herstellungsschritte für den in Fig. 5 dargestellten Verbindungsstutzen,
- Fig. 7: Abwandlungen der Ausführungsform der Fig. 5 und 6,
- Fig. 8: eine weitere Abwandlung,
- Fig. 9: zusätzliche Formen des Verbindungsstutzens,
- Fig. 10: einen durch im Bereich des Schlosses einer Schlauch- bzw. Rohrschelle versteiften Verbindungsstutzen,
- Fig. 11: eine weitere Ausführungsform eines Verbindungsstutzens
- Fig. 12: Möglichkeiten der Herstellung eines bereichsweise durch einen gestauchten Balg versteiften Verbindungsstutzens,
- Fig. 13: einen Axialschnitt einer besonders strömungsgünstigen Ausführungsform des Anschlussstutzens,
- Fig. 14: einen Radialschnitt des Anschlussstutzens gemäß der Schnittlinie XIV - XIV in Fig. 13,
- Fig. 15: einen Axialschnitt einer mehrteiligen Ausführungsform des Anschlussstutzens, welcher im Übrigen stoffschlüssig durch Schweißung mit einem Anschlusskörper verbunden ist,
- Fig. 16: einen Axialschnitt eines Verbindungsbereiches zwischen Anschlussstutzen und Anschlusskörper, wobei dieser Verbindungsbereich als Resonator ausgebildet ist,
- Fig. 17: ein Axialschnitt eines Einschubkörpers, dessen eines axiales Ende in den Anschlussstutzen einschiebbar ist und dessen anderes axiales Ende zum Aufschieben eines Anschlusskörpers dient,
- Fig. 18: einen Axialschnitt eines Anschlussstutzens sowie eines Anschlusskörpers mit dem Einschubteil der Fig. 17,
- Fig. 19: einen Axialschnitt einer gegenüber Fig. 18 abgewandelten Ausführungsform,
- Fig. 20: eine nochmals abgewandelte Ausführungsform,
- Fig. 21A: ein schematisiertes Schnittbild eines Luftfilters mit einem eingangsseitigen und einem ausgangsseitigen Anschlussstutzen und jeweils zugeordneten Anschlussrohren,
- Fig, 21B: die Verbindung des Luftfiltergehäuses mit den Anschlussrohren.

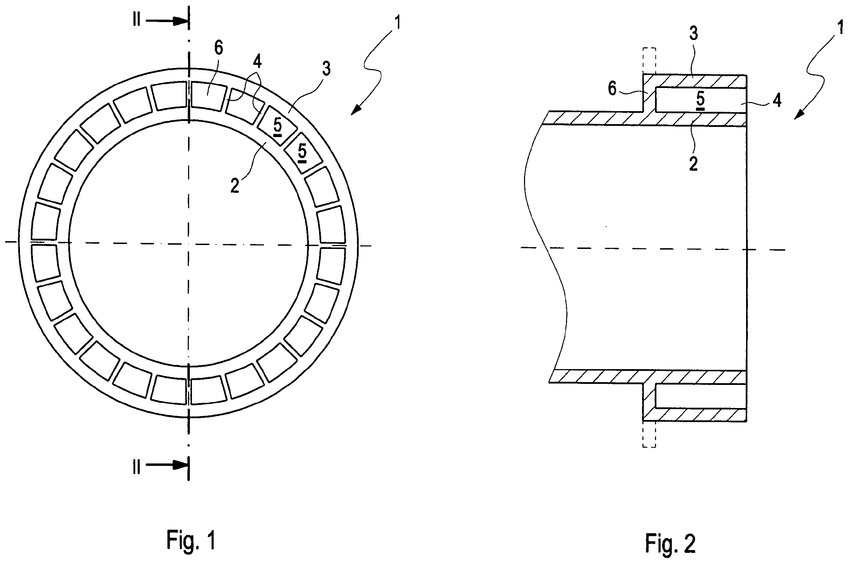

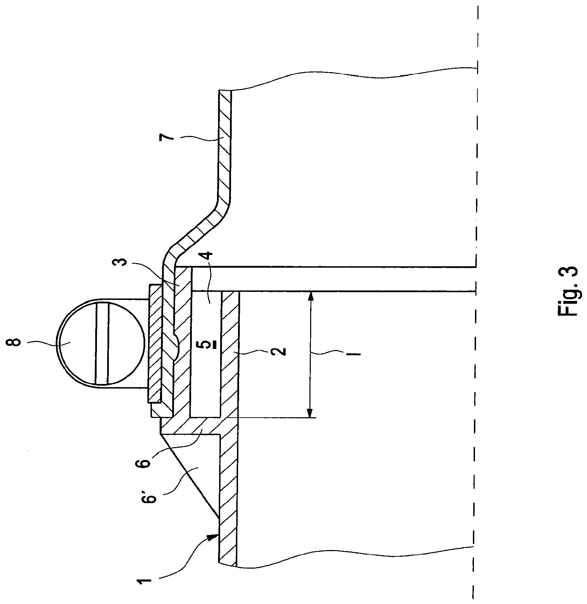

Gemäß den Fig. 1 und 2 ist das freie Ende eines Verbindungsstutzens 1 doppelwandig ausgebildet, und zwar mit einer die übrigen Wandung des Verbindungsstutzens 1 glattflächig fortsetzenden inneren Wand 2 und mit einer davon radial beabstandeten äußeren Wand 3. Dabei sind die beiden Wände 2 und 3 miteinander über Stege 4 verbunden, so dass sich ein wabenartiger Verbund ergibt. Die Stege 4 erstrecken sich jeweils in einer Axialebene des Stutzens 1.
Zwischen den Stegen 4 bzw. zwischen den Wänden 2 und 3 verbleiben kanalartige Kammern 5, die am freien Ende des Stutzens 1 offen und an ihrem anderen Ende durch eine ringscheibenförmige Wand 6 abgeschlossen sind. Dabei kann die Wand 6, wie in Fig. 2 dargestellt, die Außenumfangsseite der äußeren Wand 3 radial überragen, derart, dass ein ringförmiger Flansch gebildet wird. Außerdem kann die Wand 6 noch durch Axialstege 6', vgl. Fig. 3, versteift werden.
Gemäß Fig. 3 kann das doppelwandige freie Ende des Verbindungsstutzens 1 zum Aufschieben eines schlauch- oder rohrartigen Anschlusskörpers 7 genutzt werden, der dann seinerseits mittels einer Schlauchschelle 8 am Verbindungsstutzen 1 dauerhaft fixiert wird. Aufgrund der doppelwandigen Ausbildung des freien Endes des Anschlussstutzens 1 kann die Schlauchschelle 8 mit großer Spannung angeordnet werden. Die hohe Belastbarkeit der Doppelwandstruktur gewährleistet, dass auch bei Langzeiteinwirkung großer Spannkräfte der Schlauchschelle 8 keinerlei unerwünschte Verformungen des Verbindungsstutzens auftreten können und zwischen Verbindungsstutzen und Anschlusskörper 7 ein entsprechend großer Kraftschluss gewährleistet bleibt.

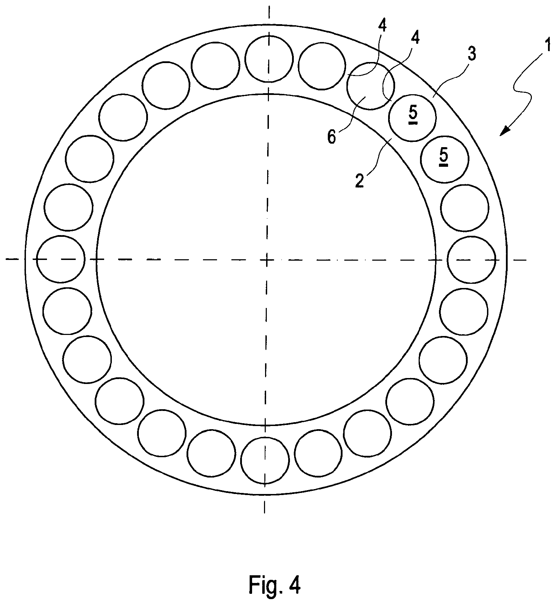

Gemäß der Fig. 3 ist vorgesehen, dass die äußere Wand 3 die innere Wand 2 in Axialrichtung etwas überragt. Dadurch wird sicher gewährleistet, dass die Kammern 5 mit dem Innenraum des Anschlussstutzens 1 bzw. des Anschlusskörpers 7 ständig kommunizieren. Damit bilden die Kammern 5 schalltechnisch Resonatoren, die Geräusche mit einer Wellenlänge λ = 4l dämpfen, wobei l die Länge der Kammern 5 bezeichnet. Durch entsprechende Bemessung der Länge l kann dann die Geräuschdämpfungswirkung der Kammern 5 an typischerweise auftretende störende Schallschwingungen innerhalb des dem Verbindungsstutzen 1 bzw. den Anschlusskörper 7 durchsetzenden Fluides angepasst werden.
Der Anschlussstutzen 1 ist vorzugsweise als Kunststoffspritzteil ausgebildet, während der Anschlusskörper 7 vorzugsweise als Kunststoffblasteil ausgebildet ist. Grundsätzlich können jedoch der Verbindungsstutzen 1 sowie der Anschlusskörper 7 in gleicher Weise als Kunststoffspritzteile oder als Kunststoffblasteile ausgebildet sein.
Gemäß Fig. 4 können die Kammern 5 zwischen der inneren Wand 2 und der äußeren Wand 3 des freien Endes des Verbindungsstutzens 1 auch mit kreisförmigem Querschnitt ausgebildet sein.

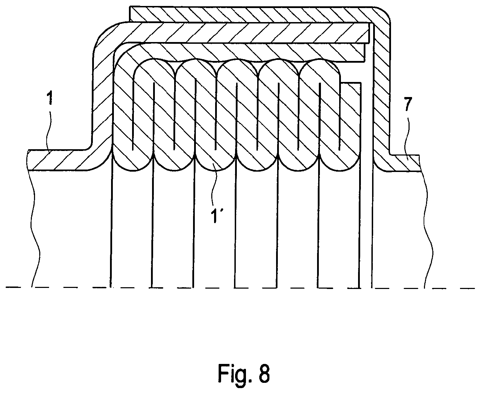

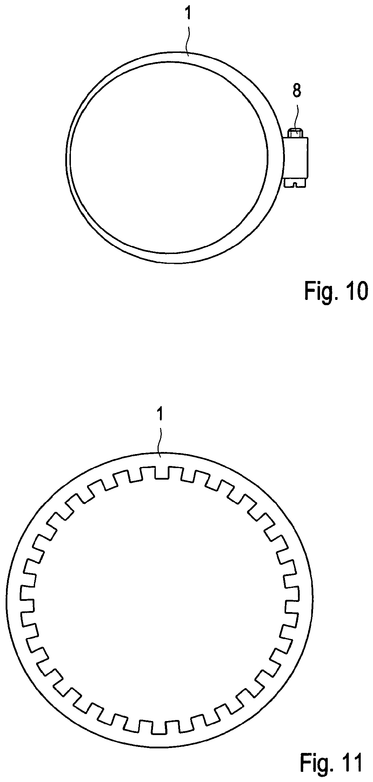

In Fig. 5 ist eine nicht erfindungsgemäße Ausführungsform für den Verbindungsstutzen 1 dargestellt. Hier ist der an das freie Ende des Verbindungsstutzens 1 angrenzende Bereich nach Art eines Balges geformt, dessen Falze auf Block gestaucht sind. Die Herstellung dieser Ausführungsform kann gemäß Fig. 6 dadurch erfolgen, dass zunächst gemäß Abbildung A ein Verbindungsstutzen 1 mit einer "offenen" Balgstruktur hergestellt wird. Im Hinblick auf geringe Herstellungskosten wird ein solcher Verbindungsstutzen als Blasteil aus Kunststoff hergestellt. Anschließend wird dann die offene Balgstruktur gemäß Abbildung B axial verpresst, so dass die gewünschte auf Block gestauchte Balgstruktur erreicht wird.
Gemäß der Fig. 5 kann ein vom freien Ende des Verbindungsstutzens 1 axial beabstandeter Falz der Balgstruktur mit vergrößertem Durchmesser ausgebildet sein. Bei der nachfolgenden axialen Verpressung der Balgstruktur bildet dann dieser Falz einen über den Außenumfang der gestauchten Balgstruktur radial nach außen hinausragenden Flansch, der bspw. als Anschlag für den auf den Verbindungsstutzen 1 aufzuschiebenden Anschlusskörper genutzt werden kann. Im Übrigen besteht die Möglichkeit, axial aufeinanderfolgende Balgfalze mit alternierend größerem oder kleinerem Außendurchmesser vorzusehen, so dass eine mit ringförmigen Vorsprüngen bzw. Nuten versehene Außenumfangsfläche am Verbindungsstutzen 1 geschaffen wird.
Die im gestauchten Zustand aufeinander liegenden Balgfalze können miteinander verklebt oder verschweißt werden, bspw. durch Ultraschallschweißung. Somit kann eine weitere Stabilitätserhöhung mit einfachen Mitteln realisiert werden.

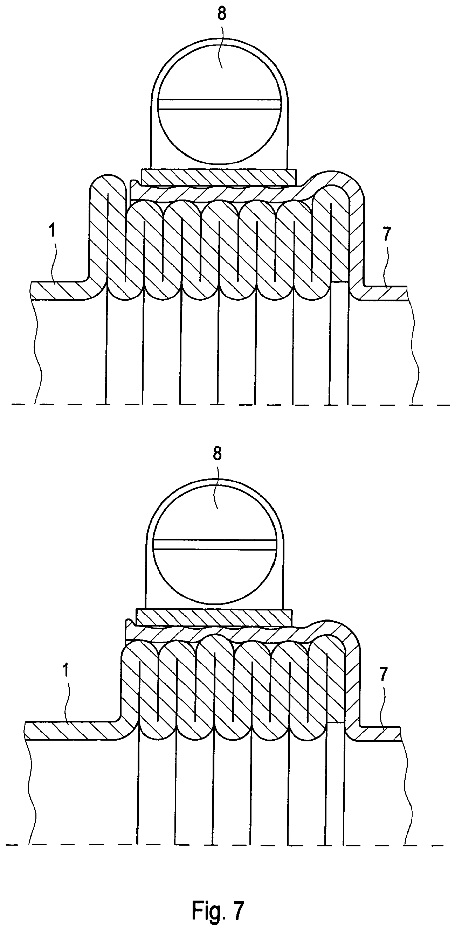

Fig. 7 zeigt verschiedene Abwandlungen der "gestauchten Balgstruktur" der Fig. 5 und 6. Wie dargestellt können die Balgfalze unterschiedliche radiale Höhen besitzen, so dass der Anschlusskörper 7 mit einem gewissen zusätzlichen Formschluss festgehalten oder eine erhöhrte Dichtigkeit der Verbindung erreicht werden kann.
Gemäß Fig. 8 kann die "gestauchte Balgstruktur" auch nach Art eines gesonderten Versteifungsteils 1' in einen außenseitig glattflächigen Verbindungsstutzen 1 eingeschoben sein. Bei einem Blasteil kommen so Flächen aufeinander, welche im Blasformvorgang eine Außenfläche bildeten. Dies ist zur Bildung einer passgenauen Verbindung vorteilhaft, da blasgeformte Bauteile über eine definierte Außenfläche mit guter Maßhaltigkeit verfügen, wohingegen die Innenflächen keine exakten Geometrien aufweisen.

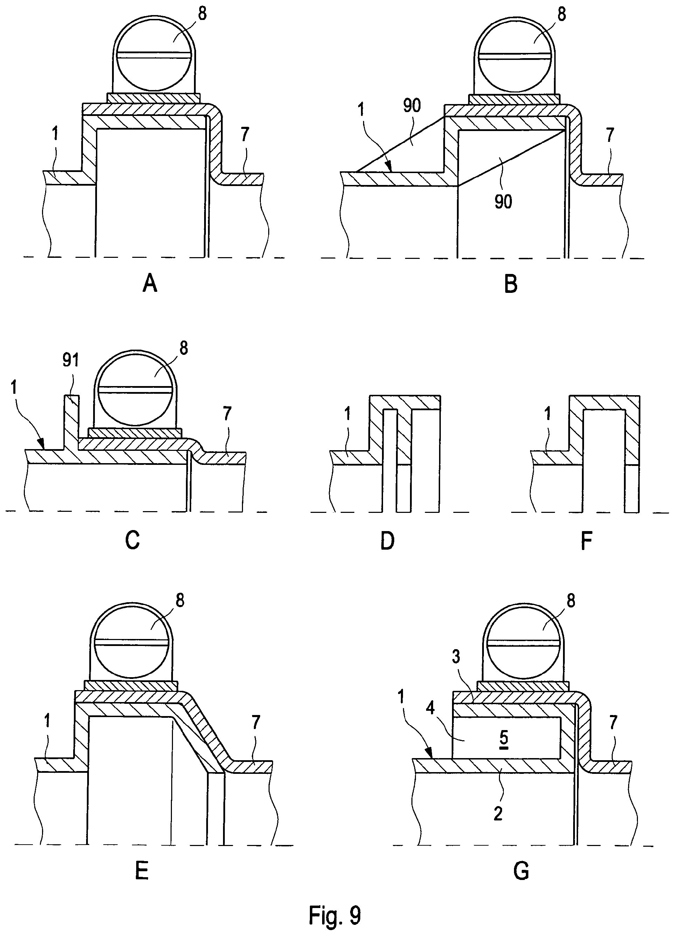

Fig. 9 zeigt weitere mögliche Formen einer versteiften Wandung des Verbindungsstutzens 1. In den Bildern A und B bildet die Wandung im Bereich der Schlauch- bzw. Rohrschelle 8 einen umlaufenden Absatz, wobei im Bild B zusätzliche Axialrippen 90 zur Versteifung vorgesehen sind. Das Bild C zeigt eine besonders einfache Form, bei der der Verbindungsstutzen 1 lediglich durch einen umlaufenden Ringsteg 91, der auch als Anschlag für den Anschlusskörper 7 dient, verstärkt ist. Das Bild D zeigt wiederum einen umlaufenden Absatz (wie Bild A), der innenseitig zusätzlich durch einen Ringsteg versteift ist. Im Bild E setzt sich der umlaufende Absatz in einen Konus fort. Im Bild F besitzt der umlaufende Absatz wiederum einen innenseitigen Ringsteg, der jedoch in Abweichung vom Bild D am freien Stirnrand des Absatzes angeordnet ist. Das Bild G zeigt für den Verbindungsstutzen 1 eine Doppelwandstruktur, ähnlich wie in Fig. 1 und 2, jedoch mit dem Unterschied, dass der Abstandsraum zwischen den Wänden nach außen geöffnet ist, außerdem kann dieser Raum durch axiale Stege 4 in Kammern 5 unterteilt sein.
Gemäß einer schematisch in Fig. 10 in Achsansicht dargestellten abgewandelten Ausführungsform kann vorgesehen sein, den Verbindungsstutzen nur innerhalb eines dem Schloss der Schlauch- bzw. Rohrschelle 8 benachbarten Umfangbereiches durch eine besondere Geometrie zu versteifen. Damit wird der Tatsache Rechnung getragen, dass die Schlauch- bzw. Rohrschelle 8 den Verbindungsstutzen 1 im Bereich des Schellenschlosses mit erhöhten Kräften beaufschlagt. Im Falle der in den Fig. 1 und 2 dargestellten Ausführungsform ist dann eine doppelwandige Ausbildung des Umfangs des Verbindungsstutzens 1 nur im Bereich des Schlosses der Schlauch- bzw. Rohrschelle vorgesehen.
Im Übrigen kann auch mit der oben erläuterten Balgstruktur eine vergleichsweise hohe Steifigkeit des Umfanges des Verbindungsstutzens im Bereich des Schlosses der Schlauch- bzw. Rohrschelle erreicht werden. Zu diesem Zweck werden die Balgfalze im Bereich der vorgenannten Schelle mit größerer radialer Tiefe ausgebildet.

In Fig. 11 wird eine weitere Ausführungsform in Achsansicht dargestellt. Hier sind an der Innenumfangsfläche des Verbindungsstutzens 1 jeweils in Axialebenen des Stutzens erstreckte Stege vorgesehen, durch die in Radialrichtung auf die Außenseite des Verbindungsstutzens 1 einwirkende Kräfte auf axial benachbarte Bereiche abgetragen werden. Bei dieser Ausführungsform ist eine erhöhte Steifigkeit im Bereich des Schlosses der Schlauch- bzw. Rohrschelle in besonders einfacher Weise realisierbar. Hier genügt es, wenn im Bereich des Schlosses der Schlauch- bzw. Rohrschelle 8 Stege mit entsprechend großer Höhe in Radialrichtung des Verbindungsstutzens angeordnet werden.

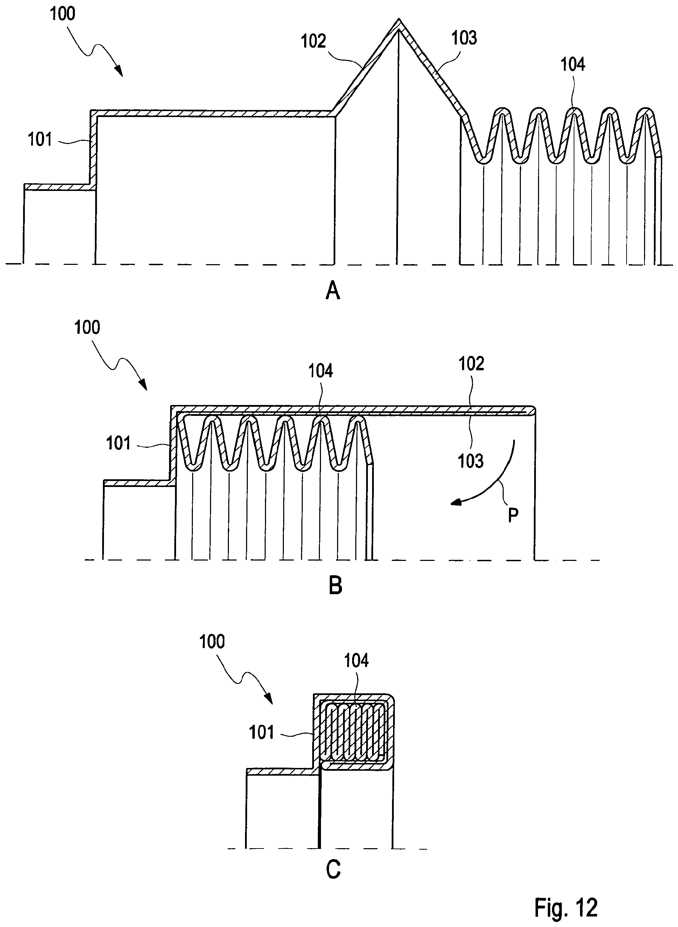

Fig. 12 zeigt nun beispielhaft die Herstellung eines nicht erfindungsgemäßen Anschlussstutzens, der durch eine gestauchte Balgstruktur versteift ist.
Zunächst wird ein Blasteil mit einem Rohrstutzen 100 hergestellt, der einen Absatz 101 aufweist und an seinem in der Zeichnung rechten Ende über Wandteile 102 und 103 mit einer vergleichsweise offenen Balgstruktur 104 verbunden ist. Dabei soll die Balgstruktur 104 einen Außendurchmesser besitzen, der etwas geringer als der Innendurchmesser des Rohrstutzens 100 ist. Nachfolgend wird dann die Balgstruktur 104 gemäß dem Bild B in den Rohrstutzen 100 eingeschoben, wobei das beim Einschieben unter Hitzeeinwirkung axial verlängerte Wandteil 103 eine Innenauskleidung des Rohrstutzens 100 und gleichzeitig eine außenumfangsseitige Umhüllung der Balgstruktur 104 bildet. Im Übrigen bilden die Wandteile 102 und 103 nunmehr eine doppelwandige axiale Fortsetzung des Rohrstutzens 100.

Gemäß dem Pfeil P in Bild B wird dann einerseits die Balgstruktur 104 auf Block gestaucht und andererseits die den Rohrstutzen 100 axial verlängernde Doppelwand nach radial einwärts umgeschlagen und gegen den Innenumfang der gestauchten Balgstruktur 104 gepresst. Im Ergebnis wird damit der im Bild C dargestellte Anschlussstutzen geschaffen, der aufgrund der allseitig umhüllten gestauchten Balgstruktur 104 eine sehr hohe Steifigkeit aufweist.

Vorzugsweise sind die aufeinander liegenden Falze der Balgstruktur 104 miteinander und mit den die Balgstruktur 104 umhüllenden Wandteilen verschweist oder verklebt.

Die radiale Höhe des Absatzes 101 entspricht bei dieser Ausführungsform etwa der radialen Höhe der Balgstruktur 104, wobei eine erhöhte Steifigkeit erreicht wird, wenn das Maß der radialen Höhe vergrößert wird.

Ein Vorteil des Anschlussstutzens gemäß dem Bild C der Fig. 12 ist darin zusehen, dass der Außenumfang des Anschlussstutzens glattflächig ausgebildet ist und deshalb vergleichsweise leicht dicht mit einer anschließenden Rohrleitung oder dergleichen verbunden werden kann. Dabei ist es weiterhin vorteilhaft, dass die Form des Außenumfangs weitestgehend durch die Form zur Herstellung des Blasteiles nach Bild A vorgegeben wird. Es wird also eine gut reproduzierbare Ausgestaltung ermöglicht.

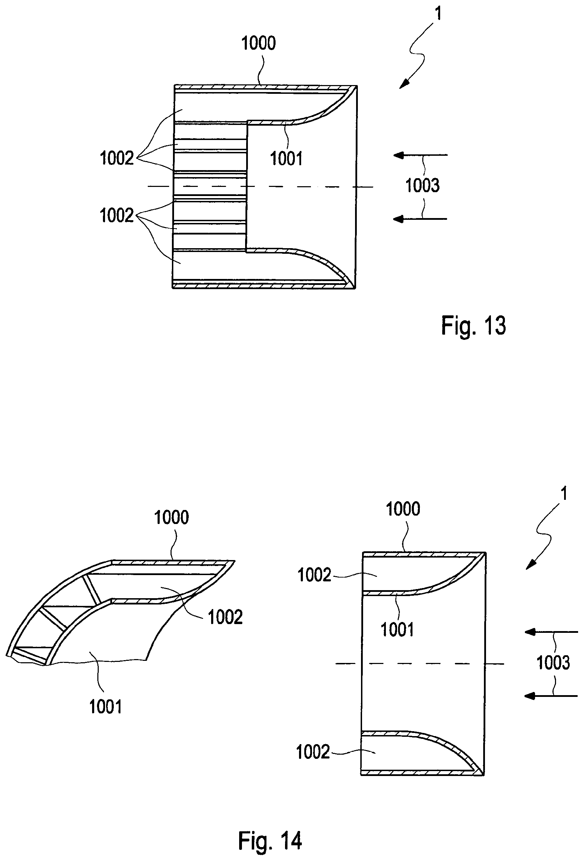

Im Beispiel der Fig. 13 besitzt der Anschlussstutzen 1 eine im Wesentlichen rohrartige Außenwand 1000, die an ihrem in der Zeichnung rechten, freien Ende mit einer nach Art einer Venturidüse ausgebildeten Innenwand 1001 verbunden ist. Beide Wände 1000 und 1001 erstrecken sich jeweils in Umfangsrichtung des Anschlussstutzens 1. Ggf. sind zwischen den Wänden 1000 und 1001 Axialwände 1002 nach Art von "Speichen" angeordnet, so dass ein besonders stabiler Verbund zwischen Außenwand 1000 und Innenwand 1001 geschaffen wird. Wie dargestellt, können diese Axialwände 1002 über das in der Fig. 13 nach links weisende Ende der Innenwand 1001 hinausgeführt sein, so dass die Axialwände 1002 zusammen mit der Außenwand 1000 eine ähnliche Struktur bilden, wie sie in Fig. 11 dargestellt wurde. Gegebenenfalls können die Wände 1002 auch schräg bzw. schraubenförmig angeordnet sein, so dass eine drallbehaftete Strömung erzeugt werden kann.

Die mit dem Innenraum des Anschlussstutzens 1 kommunizierenden Hohlräume zwischen Außenwand 1000 und Innenwand 1001 bzw. zwischen den Axialwänden 1002 wirken als Resonatorkammern, so dass bei entsprechender Bemessung ihrer Volumina störende Geräusche eines in Richtung des Pfeiles 1003 strömenden Fluides ausgelöscht werden können.

Diese geräuschmindernde Wirkung wird prinzipiell auch dann erzielt, wenn die axiale Länge der Axialwände 1002 gemäß Fig. 14 der axialen Länge der Innenwand 1001 entspricht.

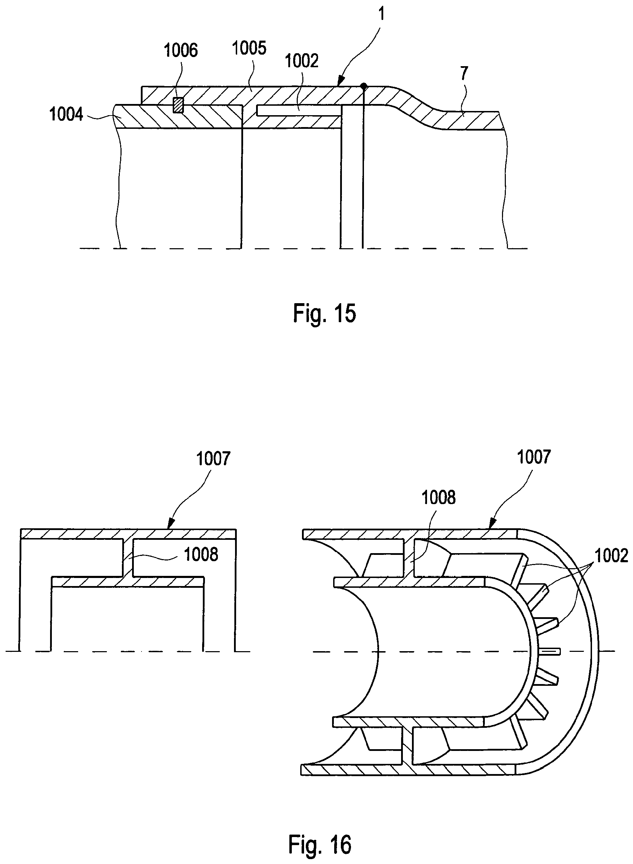

Die vergleichsweise langen Axialwände 1002 der Fig. 13 bieten in erster Linie Vorteile bei der Stabilität des Anschlussstutzens, weil auf die Außenseite des Anschlussstutzens 1 radial einwirkende Kräfte auf einen vergleichsweise großen Axialbereich des Anschlussstutzens 1 abgetragen werden.
Gemäß Fig. 15 kann der Anschlussstutzen 1 auch mehrteilig ausgebildet sein. Im dargestellten Beispiel ist auf einen rohrförmigen Teil 1004 eines nicht dargestellten Hohlkörpers ein rohrförmiges Verstärkungsteil 1005 aufgeschoben, wobei die Verbindung zwischen dem rohrförmigen Teil 1004 und dem Verstärkungsteil 1005 zusätzlich durch einen zwischen diesen Teilen angeordneten Rastring 1006, welcher vorzugsweise wie die Teile 1004 und 1005 aus Kunststoff hergestellt ist, formschlüssig gesichert wird. Das Verstärkungsteil 1005 ist in seinem axial über das rohrförmige Teil 1004 nach rechts hinausstehenden Bereich doppelwandig ausgeführt, so dass innenseitig des Verstärkungsteils 1005 eine mit dem freien Rand des rohrförmigen Teiles 1004 anschlagartig zusammenwirkende Ringstufe gebildet wird, die so angeordnet ist, dass der Rastring 1006 rastwirksam wird bzw. ist, wenn die genannte Ringstufe am zugewandten Ende des rohrförmigen Teiles 1004 anliegt.
Im Übrigen können zwischen der Innen- und der Außenwand des doppelwandigen Bereiches des Verstärkungsteiles 1005 erfindungsgemäß Axialwände 1002 angeordnet sein, so dass die Innenumfangswand und die Außenumfangswand des Verstärkungsteiles 1005 einen besonders stabilen Verbund bildet. Die zwischen den doppelten Umfangswänden des Verstärkungsteiles und den ggf. vorgesehenen Axialwänden 1002 verbleibenden Hohlräume kommunizieren wiederum mit dem Fluidströmungsweg innerhalb des rohrförmigen Teiles 1004 bzw. des anschließenden rohr- oder schlauchartigen Teiles 7 und wirken gegenüber Geräuschen als geräuschmindernde Resonatorkammern, wie es bereits oben beschrieben wurde. Schließlich zeigt die Fig. 15, dass das anzuschließende schlauch- bzw. rohrförmige Teil 7 mit dem Verstärkungsteil 1005 stoffschlüssig durch Verschweißung verbunden sein kann, wobei diese Schweißverbindung erzeugt werden kann, bevor das Verstärkungsteil 1005 auf das rohrförmige Teil 1004 aufgeschoben wird.

Das Verstärkungsteil 1005 ist vorzugsweise als Spritzgußteil aus Kunststoff ausgebildet, während das rohrförmige Teil 1004 und das anzuschließende rohr- oder schlauchförmige Teil 7 als Blasteile aus einem gleichartigen Kunststoff ausgebildet sein können.

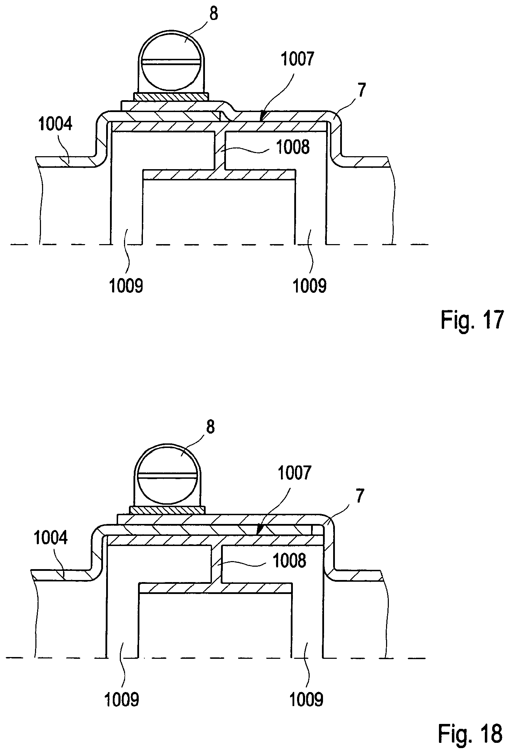

Fig. 16 zeigt ein weiteres rohrförmiges Verstärkungsteil 1007, welches sich mit einem Ende in ein rohrförmiges Teil 1004 eines (nicht dargestellten) Hohlkörpers einschieben lässt und auf dessen anderes Ende ein schlauch- oder rohrartiger Anschlusskörper 7 aufgeschoben werden kann, wie es in Fig. 17 dargestellt ist. Das Verstärkungsteil 1007 ist doppelwandig mit einer in Axialrichtung vergleichsweise langen Außenwand und einer kürzeren Innenwand ausgebildet. Die beiden Wände sind einerseits durch eine mittig angeordnete ringscheibenförmige Wandung 1008 miteinander verbunden, andererseits durch Axialwände 1002. Die axial lange Außenwand des Verstärkungsteiles 1007 wirkt gemäß Fig. 17 mit Ringstufen am rohrförmigen Teil 1004 bzw. am schlauch- oder rohrartigen Anschlusskörper 7 anschlagartig zusammen, so dass Ringspalte 1009 gebildet werden, über die die Hohlräume zwischen den Umfangswänden des Verstärkungsteiles 1007 mit dem Fluidströmungsweg innerhalb des Verstärkungsteiles 1007 kommunizieren und dementsprechend als Resonatorkammern zur Geräuschminderung wirken können.

Im Übrigen zeigt die Fig. 17, wie der schlauch- bzw. rohrartige Anschlusskörper 7 mittels einer Schlauch- oder Rohrschelle 8 auf den Außenumfang des rohrförmigen Teiles 1004 kraftschlüssig fixiert werden kann.

Bei der Ausführungsform der Fig. 17 sind das rohrförmige Teil 1004 sowie das Verstärkungsteil 1007 vorzugsweise als Spritzgußteile aus Kunststoff ausgebildet, während der schlauch- oder rohrartige Anschlusskörper 7 vorzugsweise als Blasteil aus gleichartigem Kunststoff ausgebildet ist.

Ggf. kann aber auch vorgesehen sein, nur das Verstärkungsteil 1007 als Spritzgußteil auszuformen.

Die in Fig. 18 dargestellte Ausführungsform unterscheidet sich von der Ausführungsform nach Fig. 17 im Wesentlichen nur dadurch, dass das rohrförmige Teil 1004 des nicht dargestellten Hohlkörpers das Verstärkungsteil 1007 im Wesentlichen auf dessen gesamter axialer Länge außenseitig überlappt, wobei der schlauch- oder rohrartige Anschlusskörper 7 mit entsprechend langer Überlappung auf dem Außenumfang des rohrförmigen Teiles 1004 angeordnet ist und dort mittels einer Schlauch- bzw. Rohrschelle 8 fixiert wird, die bei entsprechender Verspannung auch das Verstärkungsteil 1007 innerhalb des rohrförmigen Teiles 1004 fixiert.

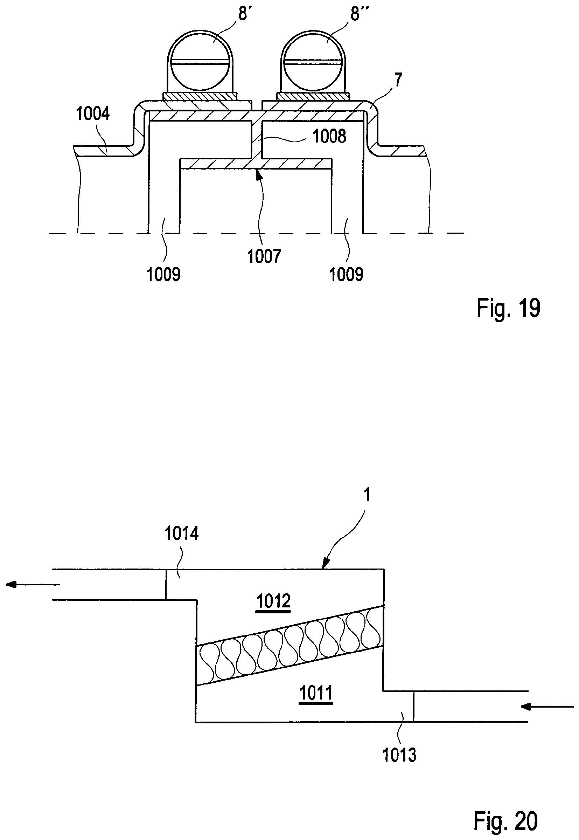

Gemäß Fig. 19 kann auch vorgesehen sein, einerseits das rohrförmige Teil 1004 und andererseits den schlauch- oder rohrartigen Anschlusskörper 7 jeweils mittels gesonderter Rohr- bzw. Schlauchschellen 8' und 8" auf dem Außenumfang des Verstärkungsteiles 1007 zu fixieren. Bei dieser Ausführungsform ist vorzugsweise nur das Verstärkungsteil 1007 als Spritzgussteil aus Kunststoff ausgebildet, während die daran fixierten Teile 1004 und 7 als Blasteile aus gleichartigem Kunststoff ausgebildet sind.

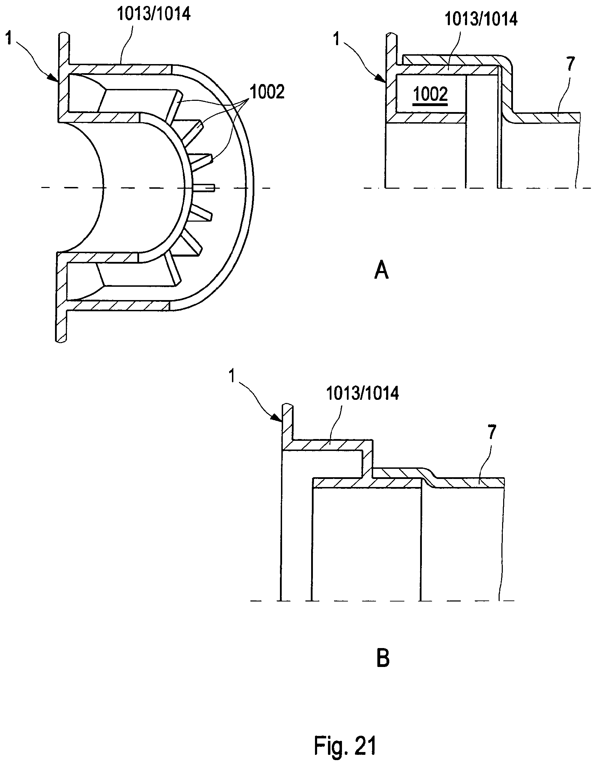

Fig. 20 zeigt nun beispielhaft, dass der Hohlkörper 1 als Luftfiltergehäuse ausgebildet sein kann, welches durch ein im dargestellten Beispiel im wesentlichen plattenförmiges Filterelement in einen Rohraum 1011 und einen Reinraum 1012 unterteilt ist. Der das Filtergehäuse bildende Hohlkörper 1 besitzt dabei einen rohraumseitigen sowie einen reinraumseitigen Anschlussstutzen 1013 und 1014, die gemäß den Abbildungen in Fig. 21 jeweils doppelwandig ausgebildet sein können. Im Bild A der Fig. 21 sind die Hohlräume zwischen der Außenwand und der Innenwand des Anschlussstutzens 1013 bzw. 1014 jeweils am freien Ende des Anschlussstutzens offen, wobei durch eine axial längere Außenwand, die mit einer Ringstufe am anzuschließenden schlauch bzw. rohrartigen Anschlusskörper 7 anschlagartig zusammenwirkt, ein Ringspalt geschaffen wird, über die die Hohlräume zwischen Außen- und Innenumfangswand des Anschlussstutzens 1013 bzw. 1014 mit dem Fluidströmungsweg innerhalb des jeweiligen Anschlussstutzens kommunizieren und damit als geräuschmindernde Resonatorkammern wirken können. Erfindungsgemäß sind zwischen der Außenumfangswand und der Innenumfangswand des Anschlussstutzens 1013 bzw. 1014 zur Strukturversteifung jeweils Axialwände 1002 angeordnet, die sich ggf. bis an die Ringstufe des schlauch- oder rohrartigen Anschlusskörpers 7 erstrecken können.

Gemäß dem Bild B der Fig. 21 sind die Außen- und die Innenumfangswand des Anschlussstutzens 1013 bzw. 1014 auch so miteinander verbunden bzw. ausgeformt, dass die Hohlräume zwischen den beiden Umfangswänden in Richtung des vom Hohlkörper 1 gebildeten Luftfiltergehäuses offen sind, wobei zwischen den beiden Umfangswänden wiederum zur Strukturversteifung Axialwände 1002 angeordnet sind. Die Innenumfangswand des Anschlusstutzens 1013 bzw. 1014 des Bildes B der Fig. 21 kann über den ringscheibenförmigen Verbindungsbereich zwischen den beiden Umfangswänden axial hinaus erstreckt sein, so dass ein freies Rohrende gebildet wird, auf das sich der schlauch- bzw. rohrartige Anschlusskörper 7 aufschieben lässt. Grundsätzlich ist es auch möglich, diesen Anschlusskörper 7 auf die Außenumfangswand des Anschlussstutzens 1013 bzw. 1014 aufzuschieben, wobei dann am Anschlusskörper eine mit dem Verbindungsbereich zwischen den Umfangswänden des Anschlussstutzens 1013 bzw. 1014 anschlagartig zusammenwirkende Ringstufe vorhanden sein sollte, die derart bemessen ist, dass der Innendurchmesser des Anschlusskörpers dem Innendurchmesser des Anschlussstutzens 1013 bzw. 1014 entspricht.

## Patentansprüche

1. Hohlkörper mit zumindest einem Anschluss- bzw. Verbindungsstutzen (1) für einen schlauch- oder rohrartigen Anschlusskörper (7), welcher an oder auf dem Verbindungsstutzen (1) in axial anschließender Position fixierbar ist,
- wobei der vollständig als Kunststoffteil ausgebildete Verbindungsstutzen (1) zumindest innerhalb eines Bereiches, der den Anschlusskörper (7) fortsetzen kann oder vom Anschlusskörper (7) axial überlappt werden kann, ein Profil mit erhöhter Formstabilität zur Abtragung von Radialkräften aufweist,
- wobei der Verbindungsstutzen (1) eine doppelte Umfangswand mit zwischen den beiden Wänden angeordneten Versteifungen aufweist,
- wobei die Versteifungen als die Umfangswände verbindende Stege oder Axialwände ausgebildet sind, welche in Achsansicht des Verbindungsstutzens (1) speichenartig radial angeordnet sind,
**dadurch gekennzeichnet,**
**dass** zwischen den Umfangswänden und/oder den Stegen bzw. Axialwänden verbleibende Leerräume an ihrem einen axialen Ende mit dem Innenraum des Verbindungsstutzens (1) kommunizieren und/oder Resonatorkammern bilden.

2. Hohlkörper nach Anspruch 1,
**dadurch gekennzeichnet,**
**dass** der Verbindungsstutzen (1) eine düsenartig geformte Innenwandung (1001) besitzt.

3. Hohlkörper nach Anspruch 1 oder 2,
**gekennzeichnet durch** eine Ausbildung als Luftfiltergehäuse mit einem rohraumseitigen Anschlussstutzen (1013) sowie einem reinraumseitigen Anschlussstutzen (1014).

## Claims

1. Hollow body with at least one union (1) for a hose-shaped or tubular connecting body (7) which can be fixed to or on the union (1) in an axial connecting position,
- wherein the union (1) completely formed as a plastic part has a profile with increased dimensional stability for dissipating radial forces at least within a region which can extend the connecting body (7) or can be overlapped axially by the connecting body (7),
- wherein the union (1) comprises a double circumferential wall with reinforcements arranged between the two walls,
- wherein the reinforcements are formed as webs or axial walls connecting the circumferential walls which are arranged radially in a spoke-like manner when viewed along the axis of the union (1),
**characterised in that**
empty spaces remaining between the circumferential walls and/or the webs or axial walls communicate at their one axial end with the inside of the union (1) and/or form resonator chambers.

2. Hollow body according to claim 1,
**characterised in that**
the union (1) comprises an inner wall (1001) shaped in the form of a nozzle.

3. Hollow body according to claim 1 or 2,
**characterised by** a configuration as an air filter housing with a tube space side union (1013) and a clean space side union (1014)

## Revendications

1. Corps creux avec au moins un embout de raccordement ou de liaison (1) pour un corps de raccordement (7) en forme de tuyau ou de tube, qui peut être fixé en position de raccordement axiale dans ou sur l'embout de liaison (1),
- dans lequel l'embout de liaison (1) formé en totalité d'une pièce de matière plastique présente au moins à l'intérieur d'une zone, qui peut prolonger le corps de raccordement (7) ou peut être chevauchée axialement par le corps de raccordement (7), un profil à stabilité de forme élevée pour dégrader les forces radiales,
- dans lequel l'embout de liaison (1) présente une paroi périphérique double avec des renforts agencés entre les deux parois,
- dans lequel les renforts sont réalisés en tant que barrettes reliant les parois périphériques ou parois axiales, qui sont agencées radialement en forme de rayon en vue axiale de l'embout de liaison (1),
**caractérisé en ce que**
des espaces vides subsistant entre les parois périphériques et/ou les barrettes ou les parois axiales communiquent, à leur première extrémité axiale, avec l'espace intérieur de l'embout de liaison (1) et/ou forment des chambres de résonance.

2. Corps creux selon la revendication 1
**caractérisé en ce que**
l'embout de liaison (1) possède une paroi interne (1001) en forme de buse.

3. Corps creux selon la revendication 1 ou 2,
**caractérisé par** une formation comme boîtier de filtre à air avec un embout de raccordement côté espace tubulaire (1013) ainsi qu'un embout de raccordement côté espace propre (1014).
